# EUROPÄISCHE PATENTANMELDUNG

(11) **EP 0 866 344 A2**
(43) Veröffentlichungstag der Anmeldung: **23.09.1998**
(21) Anmeldenummer: 98104358.1
(22) Anmeldetag: 11.03.1998
(51) Int. Cl.: G01V 3/15, F41H 11/12

(54) **Verfahren zum Detektieren und/oder Räumen von Metallschrott und Gerät hierzu**

(30) Priorität: 22.03.1997 DE 19712172
(71) Anmelder: STN ATLAS Elektronik GmbH, 28309 Bremen (DE)
(72) Erfinder: Fischer, Johannes, 28865 Lilienthal (DE); Nick, Klaus-Peter, 28832 Achim (DE); Niehoff, Ludger, 26434 Hohenkirchen (DE)

(57) **Zusammenfassung**

Bei einem Verfahren zum Detektieren und/oder Räumen von in einem Altlastgelände oberflächennah verstreutem Metallschrott, wird zwecks kostensparender Bearbeitung großer Geländeabschnitte bei großer Flächenleistung und hohem Zuverlässigkeitsgrad ein Elektromagnet (11) mit extrem großer Magnetkraft in geringem Abstand von der Geländeoberfläche über das Gelände bewegt. Auf dem Erdreich liegende ferromagnetische Schrotteile werden angezogen, im Erdreich festgehaltene Schrotteile werden aufgrund von kurzzeitigen Erregerstromreduzierungen des Elektromagneten detektiert und in einem Lageplan des Geländes zum nachfolgenden individuellen Räumen festgehalten.

## Beschreibung

Die Erfindung betrifft ein Verfahren zum Aufspüren (Detektieren) oder zum Aufspüren und Räumen von in einem Altlastgelände oberflächennah verstreutem Metallschrott und ein Gerät zur Durchführung dieses Verfahrens.

In jüngster Zeit wird weltweit zunehmend militärisches Gelände einer neuen Nutzung mit veränderter Aufgabenstellung oder einer zivilen Nutzung zugeführt. Da diese Gelände, insbesondere Truppenübungsplätze, mit erheblichen Altlasten befrachtet sind, entstehen bei Rekultivierung enorme Kosten für die Räumung des Bodens von Munition und Munitionsresten.

Nach offiziellen Schätzungen sind allein in den USA 45000 km² militärisches Gelände mit Munition verseucht. Für die Kosten zur Beseitigung dieser Altmunition mit heute bekannten Maßstäben werden ca. 500 Milliarden US-Dollar veranschlagt.

Vor diesem Hintergrund werden weltweit Technologien gesucht, mit der die Detektions- und Räumkosten drastisch verringert werden können. Wenn die Flächenbelastung mit metallischen Objekten eine kritische Grenze überschreitet, ist eine ökonomische Reinigung in den bisher üblichen Schritten Detektion, Positionsbestimmung und Ausgrabung nicht mehr möglich, da zur Zeit keine Verfahren bekannt sind, die eine Klassifizierung von gefährlichen und ungefährlichen Objekten, also im wesentlichen die Unterscheidung von Munition und Nichtmunition, ermöglichen. Die Aufnahme des Bodens mittels Bodenfräsen mit mechanischer Abtrennung der metallischen Objekte verbietet sich, da dadurch die Bodenstruktur und der Geländebewuchs nachhaltig zerstört wird.

Wegen der hohen Kosten setzt sich derzeit immer stärker die Meinung durch, daß für eine wenig intensive Nutzung des Geländes, z.B. dann, wenn sichergestellt ist, daß keine Grabe- und Schanztätigkeiten durchgeführt werden müssen, eine Oberflächenräumung des mit Altlasten verseuchten Gebietes ausreichend ist. Eine solche Oberflächenräumung wird heutzutage nach Augenschein in Handarbeit durchgeführt. In einem Gelände mit Sukzession, d.h. mit allmählich zunehmendem oder sich änderndem Bewuchs des Geländes, ist dieses Verfahren äußerst unzuverlässig. Daher greift man auch hier nach visueller Inspektion auf einen Flächenfreischnitt zurück, um anschließend eine wiederholte Begehung mit visueller Kontrolle durchzuführen. Auch bei dieser Methode muß eine Zerstörung der Geländevegetation in Kauf genommen werden, die allerdings nicht so nachhaltig ist wie bei der Bodenaufnahme.

Bei einem bekannten Verfahren und System zur Altlastendetektion, insbesondere von metallischen Gegenständen, in flächig ausgebildeten Suchbereichen (DE 44 23 623 A1) wird mindestens eine Suchsignale erzeugende, als Wirbelstromsonde oder Magnetfeldsonde ausgebildete Suchsonde im Suchbereich im wesentlichen parallel zu dessen Oberfläche entlang einer Suchbahn geführt. Die Suchsignale werden durch mindestens eine mit der Suchsonde signalübertragend verbundene Auswerteeinheit automatisch den durch Lokalisierungsmittel feststellbaren Positionen der Suchsonde im Suchbereich zugeordnet und in Abbildungen der detektierten Gegenstände im Suchbereich umgewandelt. Das System ist starr an einem Landfahrzeug angebaut, dessen Position mit einem Differential-GPS (Differential Global Position System) bestimmt wird.

Aus der DE 31 03 607 A1 ist ein Lasthebemagnet bekannt, der sich als Lastaufnahmemittel an ein Hebezeug oder an einen Ausleger eines Baggers anhängen läßt und zum Transport von Eisen-/Stahl-Erzeugnissen, wie Blöcken, Profilstählen, Blechen, Schrott und Spähnen dient. Ein solcher Lasthebemagnet besteht üblicherweise aus einem flachen, schalen- oder glockenförmigen Gußstahlgehäuse, in das eine Elektrospule eingebaut ist. Auf der Rückseite ist das Gehäuse mit drei Ösen versehen, in die Seile oder Ketten eingehängt sind, deren andere Enden an einem Tragring befestigt sind. Der Tragring wird an den Kranhaken eines Hebezeugs oder an den hydraulisch schwenkbaren Hebelarm am Schwenkarmende eines Hydraulikbaggers angehängt und läßt sich durch das Hebezeug oder den Schwenkarm vertikal auf- und abbewegen, so daß der Hebemagnet auf die Last aufgesetzt und dann die Last angehoben werden kann, um sie zu irgend einem anderen Ort zu verlagern.

Der Erfindung liegt die Aufgabe zugrunde, ein extrem kostengünstiges Verfahren zum Detektieren oder zum Detektieren und Räumen von oberflächennah verstreutem Metallschrott anzugeben, mit dem sich große Geländeabschnitte bei großer Flächenleistung und hohem Zuverlässigkeitsgrad boden- und vegetationsschonend bearbeiten lassen.

Die Aufgabe ist bei einem Verfahren der im Oberbegriff des Anspruchs 1 bzw. bei einem Gerät der im Oberbegriff des Anspruchs 3 angegebenen Gattung erfindungsgemäß durch die Merkmale im Kennzeichenteil des Anspruchs 1 bzw. des Anspruchs 3 gelöst.

Das erfindungsgemäße Verfahren bzw. Gerät hat den Vorteil, daß durch das oberflächennahe Absuchen des Geländes mit einem extrem leistungsstarken Elektromagneten, wie er beispielsweise als Lasthebemagnet bei Schrottumschlag- oder -verwertungsanlagen eingesetzt wird, alle - auch für die Räumperson unsichtbare, weil zum Beispiel durch Strauchwuchs verdeckte, eisen- oder eisenhaltige Teile bei 100 % Bestreichung der Geländeoberfläche auch zu genau 100 % ohne jegliche Zerstörung oder Beschädigung des Bodenbewuches oder der Bodenoberfläche erfaßt werden. Dabei werden sowohl alle auf der Bodenoberfläche liegenden ferromagnetischen Teile als auch oberflächennah in lockerem Boden befindliche ferromagnetische Teile durch das vom Elektromagneten erzeugte Streumagnetfeld selbst noch bei einem Bodenabstand von 0,5 m mit Zugkräften von etwa 1 kN und mehr angezogen. Diese Teile werden sofort, mit dem Aufspüren oder Detektieren geräumt, was schon einen großen Teil der Kosteneinsparung ausmacht. Daß dabei nur ferromagnetischer Schrott entdeckt und geräumt wird, bedeutet keinen ins Gewicht fallenden Nachteil des erfindungsgemäßen Verfahrens bzw. Geräts, da bei Metallaltlasten überwiegend bis vollständig Eisen- oder eisenhaltige Schrotteile anfallen. Um den Anteil an sofortiger Räumung zu erhöhen, wäre es möglich, vor Anwendung des erfindungsgemäßen Verfahrens den Boden durch geeignete Gerätschaften durchgängig zu lockern.

Besteht die Anforderung dahingehend, nicht nur die Geländeoberfläche, sondern auch noch einen oberflächennahen Bereich im verfestigten oder durchwurzelten Boden metallfrei zu räumen, so wird beim Aufspüren mit dem Elektromagneten keine unmittelbare Räumung durchgeführt, da hier die Zugkräfte des Elektromagneten evtl. nicht ausreichen, sondern zunächst nur eine Lagebestimmung der ferromagnetischen Schrotteile, die dann anschließend mit anderen Mitteln geräumt werden müssen. Hierzu wird gemäß einer vorteilhaften Ausgestaltung des erfindungsgemäßen Verfahrens bzw. Geräts gemäß Anspruch 2 bzw. 8 der konstante Erregerstrom des Elektromagneten fortlaufend gemessen und signifikante, kurzfristige Absenkungen im Erregerstrom detektiert. Jede signifikante Absenkung im Erregerstrom ist ein sicheres Anzeichen für ein im Boden vorhandenes ferromagnetisches Objekt. Dies beruht physikalisch darauf, daß das magnetische Streufeld des Elektromagneten auch in die Tiefe des Bodens eindringt und daß dort in das Streufeld des Magneten gelangende ferromagnetischen Teile dadurch "Arbeit" in dem Magnetfeld erzeugen, daß der Elektromagnet bewegt wird. Dieses führt zu einer Energieabnahme bzw. einer Flußänderung gegenüber dem ungestörten Streufeld, wodurch in der Erregerspule des Elektromagneten eine der Flußänderung proportionale Spannung induziert wird, die so gerichtet ist, daß der Erreger- oder Spulenstrom kurzfristig absinkt. Wird nunmehr die Position des Elektromagneten innerhalb des Geländes erfindungsgemäß im Moment des Absinkens des Erregerstroms festgestellt, so kann der Ort des Objekts automatisch kartographisch festgehalten werden. Nach der kartographischen Erfassung der unter der Bodenoberfläche fest eingebetteten Schrotteile, müssen diese mit geeignetem, mechanischem Räumgerät gezielt und einzeln entfernt werden. Das in Verbindung mit der Objektdetektion erforderliche Navigationssystem ist zusätzlich dafür geeignet, den Nachweis einer vollständigen Flächenabsuche des Geländes beim Räum- bzw. Detektionsvorgang zu führen.

Zweckmäßige Ausführungsformen des erfindungsgemäßen Geräts zum Detektieren und / oder Räumen von oberflächennah vertreutem Metallschrott in eienm Altlastgelände ergeben sich aus den weiteren Ansprüchen.

Gemäß einer bevorzugten Ausführungsform des erfindungsgemäßen Geräts wird als Trägerfahrzeug für den Elektromagneten ein sogenanntes gehärtetes Fahrzeug verwendet, d.h. ein Fahrzeug, daß selbst und bezüglich des Bedienungspersonals weitgehend gegen Detonation von Munition geschützt ist. In diesem Fall können z.B. Kosten für eine Vorabbegehung des zu räumenden Geländes entfallen, da der Elektromagnet in ausreichendem Abstand vor dem gehärteten Fahrzeug montiert werden kann und eventuell detonierende Munition keine nennenswerten Schäden am Fahrzeug verursachen. Bei erhöhter Gefährdung kann das Fahrzeug mit einem Navigationssystem ausgestattet werden, so daß es autonom fahren und von einem abgesetzen Bedienfahrzeug aus ferngesteuert werden kann. Sinnvoll ist es dann, zwischen Elektromagnet und Trägerfrequenz eine im Gefahrenfalle wirksame Sollbruchstelle vorzusehen, die nach Zerstörung mit geringem Aufwand repariert werden kann.

Die Erfindung ist anhand eines in der Zeichnung dargestellten Ausführungsbeispiels eines Geräts zum Detektieren und/oder Räumen im folgenden näher beschrieben.
Es zeigen:
- Fig. 1: eine Seitenansicht eines Räumgeräts,
- Fig. 2: ein Blockschaltbild einer Auswertestation für die Schrottdetektion im Räumgerät in Fig. 1.

Das in der Zeichnung dargestellte Räumgerät dient zum Räumen und/oder Detektieren von oberflächennah verstreutem Metallschrott in einem sogenannten Altlastgelände. Solcher Metallschrott ist in der Regel eisenhaltig und setzt sich überwiegend aus Munition und Munitionsresten zusammen, insbesondere dann, wenn es sich bei dem Gelände um einen ehemaligen Truppenübungsplatz handelt. Das Gerät besteht aus einem geländegängigen Fahrzeug, hier einem Grabebagger, und einem am Fahrzeug 10 angeordneten Elektromagneten 11 extrem großer Leistung, der von dem Fahrzeug 10 mit geringem Vertikalabstand zur Geländeoberfläche gehalten ist. Der Elektromagnet 11 ist dabei an einem in Fahrtrichtung des Fahrzeugs 10 vor dieses vorstehenden Ausleger 12 angeordnet, der hydraulisch gehoben oder gesenkt und in der Horizontalebene geschwenkt werden kann, so daß der Bodenabstand des Elektromagneten 11 entsprechend dem Oberflächenverlauf des zu bearbeiten Geländes angepaßt werden kann. Der Elektromagnet 11 ist kreisrund und weist einen Durchmesser von ca. 1,5 bis 2 m auf. Er ist entweder über eine Kette 13 an dem Ausleger 12 befestigt, kann jedoch aber auch zur Feineinstellung seines Abstands zur Bodenoberfläche mit einem am Ausleger 12 gehaltenen Hebezeug verbunden werden. Ein auf dem Fahrzeug 10 angeordnetes dieselmotorisches Stromaggregat 14 dient zur Stromversorung des Elektromagneten 11. Der im Stromaggregat 14 enthaltene Drehstromgenerator hat eine maximale Leistung von 30 kVA bei einer Nennspannung von 400 V und einer Nennfrequenz von 50 Hz. Das Stromaggregat 14 speist einen statischen Umformer, der einen Gleichstrom zur Erregung des Elektromagneten 11 von bis zu 100 A bei einer Gleichspannung von 230 V liefert. Das Fahrzeug 10 kann zum Schutz gegen unerwartete Munitionsexplosion mit einer entsprechenden Schutzvorrichtung ausgestattet werden.

Das zu bearbeitenden Gelände wird mit dem Fahrzeug 10 systematisch schrittweise abgefahren. Bei jedem Stillstand des Fahrzeugs 10 wird der Ausleger 12, der hydraulisch so eingestellt ist, daß der Elektromagnet 11 den kleinstmöglichen Abstand von der Oberfläche des Geländes hat, mit langsam schwenkenden Suchbewegungen vor dem stehenden Fahrzeug 10 quer zu dessen Fahrtrichtung hin und her bewegt, wobei der Elektromagnet 11 parallel zur Geländeoberfläche verschoben wird. Auf der Bodenoberfläche aufliegende ferromagnetische Schrotteile sowie in lockerem Boden oberflächennah befindliche Schrotteile werden von dem Streufeld des Magneten angezogen und damit von der Oberfläche entfernt. Ein dem Fahrzeug 10 beigestelltes Transportmittel kann den aufgenommenen Metallschrott übernehmen, der mit Abschalten der Magneterregung von dem Elektromagneten 11 abfällt. Mittels Videoüberwachung können die an dem Elektromagneten 11 hängenden Schrotteile bestimmt und klassifiziert werden, so daß ggf. bestimmte Teile aufgrund ihrer Gefährlichkeit einer Sonderbehandlung unterzogen werden können. Danach fährt das Fahrzeug 10 um ein vorgegebenes Intervall weiter, und bei stehendem Fahrzeug 10 wiederholt sich der beschriebene Vorgang so oft, bis das gesamte Gelände flächendeckend von dem Elektromagneten 11 überstrichen worden ist.

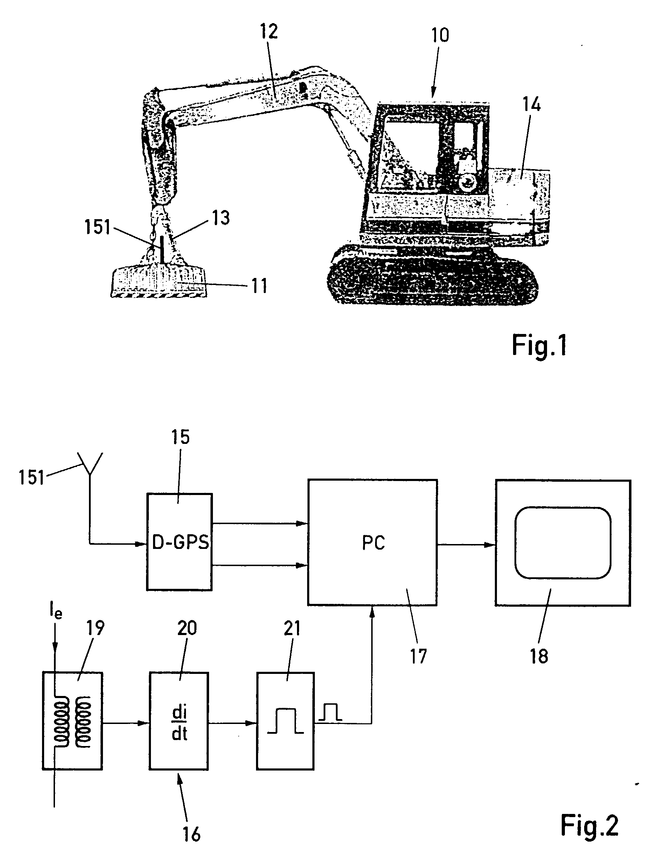

Um der Anforderung nach metallfreiem Räumen auch in einem oberflächennahen Bereich des Bodens unter der Geländeoberfläche zu erfüllen, ist in dem Fahrzeug 10 noch zusätzlich eine Auswertestation für die Schrottdetektion vorgesehen, die in Fig. 2 im Blockschaltbild dargestellt ist. Diese umfaßt eine Navigationseinrichtung 15, die fortlaufend den Standort des Fahrzeugs 10, genauer gesagt, die Position des Elektromagneten 11 im Gelände erfaßt, eine Erkennungs- und Registriervorrichtung 16 für kurzzeitige, signifikante Absenkungen im Erregerstrom des Elektromagneten 11, eine Auswerteeinheit 17, die automatisch jede Registrierung der erkannten Erregerstromabsenkungen in Zuordnung zu der Magnetposition protokolliert und für den Bediener und die Dokumentation entsprechend aufbereitete Informationen liefert, sowie einen Monitor 18, auf dem diese Informationen dargestellt werden.

Als Navigationseinrichtung 15 wird ein handelsübliches Differential-GPS (Global Position System) verwendet, dessen Empfangsantenne 151 auf der Oberseite des Elektromagneten 11 mittig angeordnet ist (Fig. 1). Dieses Differential-GPS 15 liefert fortlaufend die Koordinaten des Elektromagneten 11, von denen die Flächenkoordinaten x, y in der Auswerteeinheit 17 verarbeitet werden. Die z-Koordinate des Elektromagneten 11 kann vernachlässigt werden. Die Erkennungs- und Registriervorrichtung 16 für signifikante Erregerstromabsenkung weist einen im Erregerstromkreis des Elektromagneten 11 angeordneten Strommesser 19, ein an dessen Meßausgang angeschlossenes Differenzierglied 20 und einen Impulsformer 21 auf. An dem Ausgang des Differenzierglieds 20 tritt dann ein Signal auf, wenn der an sich konstante Erregergleichstrom Iₑ im Elektromagneten 11 infolge eines in das Magnetfeld des Elektromagneten 11 bei dessen Schwenken eintretenden ferromagnetischen Schrotteils abgesenkt wird. Dieses Signal wird im Impulsformer 21 zu einem Rechteckimpuls konstanter Impulshöhe umgeformt und an die Auswerteeinheit 17 gemeldet.

Als Auswerteeinheit 17 wird ein handelsüblicher PC (Personal Computer) mit entsprechender Software verwendet, in der beispielsweise auch eine Karte des zu entsorgenden Geländes datenmäßig abgespeichert ist. Mit jedem vom Impulsformer 21 gelieferten Impuls werden im PC 17 die vom GPS 15 gelieferten Koordinaten x, y der momentanen Magnetposition markiert und auch abgespeichert. Auf einer auf dem Monitor 18 dargestellten Geländekarte werden die so markierten Magnetpositionen durch Symbole, die die detektierten Schrotteile kennzeichnen, mit den entsprechenden Geländekoordinaten dargestellt. Anhand dieser in der Auswertestation kartographisch festgehaltenen Positionen der von dem Räumgerät nicht räumbaren, weil in den Boden eingesenkten, Schrotteile im Gelände können diese in einem nachfolgenden Schritt mittels geeigneter Grabwerkzeuge individuell ausgegraben werden.

Die Navigationseinrichtung 15 ist nicht nur für den Detektionsprozeß erforderlich, sondern wird auch schon beim Räumungsprozeß nutzbringend eingesetzt. Hier dient sie zum protokollierten Nachweis, daß das zu säubernde Gelände von dem Räumfahrzeug 10 auch zu 100 % überfahren worden ist.

Die Erfindung ist nicht auf das vorstehend beschriebene Ausführungsbeispiel des Räumgeräts beschränkt. So kann als Trägerfahrzeug für den Elektromagneten ein Panzer, ein Radlader, ein Räumbagger oder dergleichen verwendet werden.

## Patentansprüche

1. Verfahren zum Aufspüren (Detektieren) oder zum Aufspüren und Räumen von insbesondere in einem Altlastgelände oberflächennah verstreutem Metallschrott, dadurch gekennzeichnet, daß ein Elektromagnet mit extrem großer Magnetkraft nach Art eines Lasthebemagneten in geringem Abstand von der Geländeoberfläche über das Gelände bewegt wird.

2. Verfahren nach Anspruch 1, dadurch gekennzeichnet, daß fortlaufend die Position des Elektromagneten bestimmt und protokolliert wird, daß fortlaufend der Erregerstrom des Elektromagneten gemessen wird, daß signifikante Amplitudenabsenkungen im Erregerstrom registriert werden und daß zu jeder Registrierung einer Amplitudenabsenkung die momentane Position des Elektromagneten abgespeichert wird.

3. Gerät zum Aufspüren (Detektieren) oder Aufspüren und Räumen von in einem Altlastgelände oberflächennah verstreutem Metallschrott, gekennzeichnet durch ein geländegängiges Fahrzeug (10) und einen als Lasthebemagnet mit extrem großer Magnetkraft ausgelegten Elektromagneten (11), der am Fahrzeug (10) mit geringem Vertikalabstand parallel zur Geländeoberfläche gehalten ist.

4. Gerät nach Anspruch 3, dadurch gekennzeichnet, daß der Elektromagnet (11) an einem in Fahrtrichtung des Fahrzeuges (10) vor das Fahrzeug (10) vorstehenden Ausleger (12) angeordnet ist und daß der Ausleger (12) quer zur Fahrtrichtung des Fahrzeugs (10), und vorzugsweise auch in Vertikalrichtung, schwenkbar ausgebildet ist.

5. Gerät nach Anspruch 4, dadurch gekennzeichnet, daß der Elektromagnet (11) an einem am Ausleger (12) befestigten Hebezeug gehalten ist.

6. Gerät nach einem der Ansprüche 3 bis 5, dadurch gekennzeichnet, daß der Elektromagnet (11) kreisrund ist und einen Durchmesser von 1,5 bis 2 m aufweist.

7. Gerät nach einem der Ansprüche 3 bis 6, dadurch gekennzeichnet, daß auf dem Fahrzeug (10) ein dieselmotorischer Stromerzeuger (14) angeordnet ist.

8. Gerät nach einem der Ansprüche 3 bis 7, gekennzeichnet durch eine Erkennungs- und Registriervorrichtung (16) für kurzzeitige, signifikante Absenkungen im Erregerstrom des Elektromagneten (11), eine Navigationseinrichtung (15), die fortlaufend die Position des Elektromagneten (11) im Gelände vermißt, und eine Auswerteeinheit (17), die zu jeder Registrierung der Erregerstromabsenkung die momentane Magnetposition festhält.

9. Vorrichtung nach Anspruch 8, dadurch gekennzeichnet, daß die Erkennungs- und Registriervorrichtung (16) für die Erregerstromabsenkungen einen im Erregerstromkreis des Elektromagneten (11) angeordneten Strommesser (19), ein an dem Meßausgang des Strommessers (19) angeschlossenes Differenzierglied (20) und einen dem Differenzierglied (20) nachgeschalteten Impulsformer (21) aufweist.

10. Vorrichtung nach Anspruch 8 oder 9, dadurch gekennzeichnet, daß als Navigationseinrichtung (15) ein Differential-GPS verwendet wird, dessen Empfangsantenne (151) mittig auf der Oberseite des Elektromagneten (11) angeordnet ist.

11. Gerät nach einem der Ansprüche 3 bis 10, dadurch gekennzeichnet, daß das Fahrzeug (10) gegen Munitionsdetonation geschützt ist.

12. Gerät nach einem der Ansprüche 3 bis 11, dadurch gekennzeichnet, daß das Fahrzeug (10) ein Panzer, ein Räumbagger, ein Radlader, ein Grabebagger oder ein ähnlich schweres Gerät ist.

13. Gerät nach einem der Ansprüche 3 bis 12, dadurch gekennzeichnet, daß dem Fahrzeug (10) eine Vorrichtung zum Lockern der Bodenoberfläche vorgesetzt ist.
